Europäisches Patentamt

European Patent Office

Office européen des brevets

(19)

(11) Veröffentlichungsnummer: **0 224 609**
**A1**

## (12) EUROPÄISCHE PATENTANMELDUNG

(21) Anmeldenummer: 85115374.2

(22) Anmeldetag: 04.12.85

(51) Int. Cl.⁴ **G21C 1/06** , G21C 13/08

(43) Veröffentlichungstag der Anmeldung:
**10.06.87 Patentblatt 87/24**

(84) Benannte Vertragsstaaten:
**CH DE FR GB LI NL SE**

(71) Anmelder: **Hochtemperatur-Reaktorbau GmbH**
**Kanalstrasse 25**
**D-4600 Dortmund 1(DE)**

(72) Erfinder: **Pschowski, Joachim**
**Jahnstrasse 43**
**D-6945 Hirschberg(DE)**
Erfinder: **Schöning, Josef, Dr.**
**Kleinfeldweg 29**
**D-7521 Hambrücken(DE)**
Erfinder: **Wachholz, Winfried**
**Kirschenstrasse 45**
**D-6941 Gorxheim-Trösel(DE)**

(74) Vertreter: **Dahlmann, Gerhard, Dipl.-Ing.**
**c/o Hochtemperatur-Reaktorbau GmbH**
**Gottlieb-Daimler-Strasse 8 Abt. KM 2.2**
**D-6800 Mannheim1(DE)**

(54) **Gasgekühlter Hochtemperaturreaktor mit kugelförmigen Brennelementen.**

(57) Erfindungsgegenstand ist ein gasgekühlter Hochtemperaturreaktor mit kugelförmigen Brennelementen, dessen Primärkreislauf von einem Spannbetondruckbehälter und Durchdringungsabschlüssen umschlossen ist. Die Integrität der Primärkreislaufkomponenten des Hochtemperaturreaktors ist durch eine Reihe von qualitätserzeugenden und auf Sicherheit gerichteten Maßnahmen gewährleistet. Zur wirtschaftlicheren Herstellung und Betreibung des Hochtemperaturreaktors werden diese Maßnahmen voll ausgenutzt, so daß mögliche Leckagen der druckführenden Komponenten einen vorgegebenen maximalen Wert nicht übersteigen, die Abgaswege der aktivgasführenden Leitungen geringere Dimensionen und die Nachwärme-Abfuhrsysteme eine kleinere Kapazität haben als bisher üblich. Innerhalb des gesamten Hochtemperaturreaktors kann auf Rohrbruchsicherungen verzichtet werden.

EP 0 224 609 A1

## Gasgekühlter Hochtemperaturreaktor mit kugelförmigen Brennelementen

Die Erfindung betrifft einen gasgekühlten Hochtemperaturreaktor mit kugelförmigen Brennelementen, dessen Primärkreislauf von einen Spannbetondruckbehälter und Durchdringungsabschlüssen umschlossen ist und bei dem die Integrität Komponenten des Primärkreislaufs durch hochwertige Fertigung und Auslegung durch die Ausführung einiger dieser Komponenten als für einen Hochtemperaturrektor spezifische Konstruktionen sowie durch kontinuierliche und diskontinuierliche Überwachung sicherheitstechnisch wichtiger Funktionen und Betriebsdaten gewährleistet ist.

Ein Hochtemperaturreaktor dieses Bautyps ist beispielsweise in der deutschen Patentanmeldung P 34 01 499.3 beschrieben. Der Primärkreis dieses bekannten Reaktors ist von einer druckführenden Umschließung umgeben, die Drucktragfunktion als auch Dichtfunktion hat und die Freisetzung von Spaltprodukten an die Umgebung bei Normalbetrieb und bei Störfällen auf Werte begrenzt, die unterhalb der zulässigen Grenze liegen. Der Verlust der Drucktragfunktion, unter dem ein katastrophales Versagen des Spannbetondruckbehälters verstanden wird, ist bei diesem Hochtemperaturreaktor durch Anwendung des Prinzips der redundanten Konstruktion ausgeschlossen.

Unter der Integrität der Komponenten des Primärkreislaufs, die unmittelbar den Primärkühlmitteleinschluß bilden, wird der Ausschluß von spontanem, großflächigem Versagen verstanden. Durch die Integrität dieser Komponenten wird die Integrität des Primärkreises, d.h. der sichere Einschluß des Primärkühlmittels, erreicht.

Aufgabe der vorliegenden Erfindung ist es, einen Hochtemperaturreaktor des eingangs beschriebenen Bautyps zu schaffen, der durch den richtigen Einsatz der im Oberbegriff genannten qualitätserzeugenden und auf Sicherheit gerichteten Maßnahmen wirtschaftlicher hergestellt und betrieben werden kann, ohne daß die Integrität des Primärkreises beeinträchtigt ist.

Gemäß der Erfindung wird die gestellte Aufgabe durch einen Hochtemperaturreaktor gelöst, der die folgenden Merkmale aufweist:

a) eine mögliche Leckage einer jeden druckführenden Komponente kann einen vorgegebenen maximalen Wert nicht übersteigen, so daß die die Komponenten umschließenden Räume im Fall einer Leckage einer geringeren Druck-und Temperaturbelastung als bisher ausgesetzt sind;

b) die Abgaswege der aktivgasführenden Leitungen haben eine geringere Dimension als bisher üblich;

c) infolge der geringeren zeitlichen Abnahme der Dichte des Kühlgases durch die langsamere Druckentlastung haben die Nachwärme-Abfuhrsysteme eine kleinere Kapazität als bisher üblich;

d) innerhalb des gesamten Hochtemperaturreaktors wird auf Rohrbruchsicherungen verzichtet;

e) zu belüftende Räume, insbesondere zur Aufnahme von Meßgeräten, haben ein geringer ausgelegtes Kühlsystem als bisher üblich.

Der erfindungsgemäße Hochtemperaturreaktor ist so konzipiert, daß sich in den druckführenden Komponenten keine kritischen Risse bilden können. Kleinere Leckagen an einzelnen Komponenten werden nicht ausgeschlossen, solange die sichere Abschaltung, die langfristige Erhaltung der Unterkritikalität, die sichere Nachwärmeabfuhr und die Einhaltung der Aktivitätsfreisetzungsgrenzen gewährleistet sind.

Die qualitätserzeugenden und auf Sicherheit gerichteten Schritte umfassen eine hochwertige Auslegung und Fertigung der genannten Komponenten sowie die Kontrolle der Qualität von Material, Halbzeug und fertiger Komponente; außerdem ist die Verwendung konstruktiver Lösungen vorgesehen, die bei Versagen von Trag-und Dichtelementen den entstehenden Schaden in zulässigen Grenzen halten. Durch eine auf den Anwendungsfall abgestimmte betriebliche Überwachung wird die einwandfreie Funktion der Komponenten bestätigt.

Die genannten konstruktiven Lösungen werden bei Komponenten angewandt, die einige für einen Hochtemperaturreaktor spezifische Besonderheiten aufweisen. Diese Besonderheiten sind für die Integrität der Komponenten von wesentlicher Bedeutung. Zu diesen Komponenten gehören der Spannbetondruckbehälter und die Abschlüsse für in dem Behälter vorgesehene Durchdringungen. Diese Komponenten zeichnen sich dadurch aus, daß beim Versagen eines tragenden oder dichtenden Elementes ein anderes oder mehrere andere dessen Funktion übernehmen, so daß die Integrität des Primärkreises gewährleistet bleibt.

Bei dem vorgespannten Betondruckbehälter des Hochtemperaturreaktors ist der Tragkörper im wesentlichen nur auf Druck beansprucht, wodurch er sicher gegen Versagen ist. Daß in lokalen Bereichen auch Zugspannungen auftreten können, ist dabei unerheblich, da die Summe aller Spannungen über den Querschnitt immer im Druckbereich liegt. Der Betonkörper und die Vorspannsysteme haben zusammen die Aufgabe, den Behälterinnendruck aufzunehmen. Die Vorspannsysteme bestehen aus einer Vielzahl tragender Spannkabel, in denen durch die Vorspannung Zugbeanspruchung erzeugt wird. Die Bedeutung einer Vielzahl in ihrer Funktion voneinander unabhängiger Spannkabel für die Integrität des Spannbetondruckbehälters ist besonders hervorzuheben. Selbst das Versagen eines oder mehrerer Spannkabel hat praktisch keinen Einfluß auf die Tragfähigkeit des Betonkörpers.

Jedes Spannkabel besteht wiederum aus einer Vielzahl ebenfalls voneinander unabhängiger Tragelemente (Kabellitzen), so daß es eine vielfach redundante Konstruktion darstellt. Auch das Versagen des einzelnen Tragelementes (beispielsweise durch einen Materialfehler) ist für die Integrität des Spannbetondruckbehälters ohne Bedeutung, und zwar aus folgenden Gründen:
die Nachbarelemente übernehmen die Last des ausgefallenen Elementes bei minimaler Zusatzbelastung;
das versagende Tragelement hinterläßt keinen Riß im bruchmechanischen Sinn, die tragenden Nachbarelemente erfahren keine Rißspitzenbelastung; eine instabile Rißausbreitung ist somit infolge der Aufteilung der Last auf eine Vielzahl von Elementen prinzipiell nicht möglich.

Die sichere Abdichtung des Spannbetontragwerkes erfolgt durch den Liner. Er ist gestützt und verankert durch den dahinterliegenden Betonteil. Eine Linerleckage ist aufgrund der hohen Fertigungs-und Auslegungsqualität und des durch die Vorspannung der Spannkabel erzeugten großflächigen zweiaxialen Druckspannungszustandes ausgeschlossen. Für dennoch zu unterstellende hypothetische Linerrisse bildet der Betonkörper eine extrem starke Durchflußbegrenzung.

Bei den Durchdringungen des Spannbetondruckbehälters wird eine großflächige Freisetzung des Primärkühlmittels durch metallische Abschlüsse mit Durchflußbegrenzung bzw. durch Betondeckel verhindert.

Die gezielten Anforderungen an die Qualitätserzeugung führen bei den metallischen Durchdringungsabschlüssen zu einer hohen Bauteilzähigkeit, die zusammen mit einer in bezug auf Festigkeit und Prüfbarkeit optimierten Konstruktion sowie einer ausreichenden Überwachung der Herstellungsprozesse ein spontanes Versagen der Durchdringungsabschlüsse ausschließt. Unwahrscheinliche, dennoch zu unterstellende Leckagen sind durch funktionell getrennte Durchflußbegrenzungen auf einen der Auslegung des Hochtemperaturreaktors zugrunde liegenden Wert begrenzt.

Anstelle von Stahldeckeln können als Durchdringungsabschlüsse auch Betondeckel verwendet werden. Bei diesen ist der Tragkörper sicher gegen Versagen, da er den Innendruck vor allem über Gewölbewirkung abträgt und der Beton somit überwiegend auf Druck beansprucht wird.

Zur Abstützung des Betontragkörpers werden Pendelstützen oder Spannkabel eingesetzt, die in großer Anzahl redundant vorzusehen sind. Die Dichtfunktion übernimmt wie beim Betontragwerk ein an der Innenseite des Betondeckels angebrachter Liner.

An allen Abschlüssen werden zur Abdichtung Doppeldichtungen mit Leckageüberwachung des Zwischenraumes vorgesehen.

Zu den Hochtemperaturreaktor-spezifischen konstruktiven Besonderheiten, bei denen im Versagensfall eine Schadensbegrenzung durch eine andere Konstruktion bewirkt wird, gehören auch die Tragstrukturen innerhalb des Spannbetondruckbehälters angeordneter Wärmetauscher wie Dampferzeuger und Hilfseinrichtungen für die Nachwärmeabfuhr. Die Tragstrukturen, die nicht zugänglich sind, weisen jeweils eine redundante, im Normalfall unbelastete Abstützung auf, die bei Versagen der ersten deren Funktion übernimmt. Die dabei entstehende Belastung der Wärmetauscherrohre ist ohne Bedeutung.

Abweichungen von den spezifizierten Betriebszuständen werden durch kontinuierliche und diskontinuierliche Messungen und Prüfungen von sicherheitstechnisch wichtigen Funktionen und Betriebsdaten erkannt. So werden Kraftmessungen an ausgewählten Spannkabeln, Leckagemessungen im Zwischenraum der Doppeldichtungen der Durchdringungsabschlüsse, Feuchtemessungen im Primärkreis sowie Aktivitätsmessungen im Reaktorschutzgebäude durchgeführt. Ergänzt werden diese Überwachungsmaßnahmen durch periodische visuelle Prüfungen. Aus den Daten der Druck-und Temperaturmessungen im Primär-und Sekundärkreis wird eine betriebsbegleitende Belastungsanalyse vorgenommen.

Durch die hochwertige Auslegungs-und Fertigungsqualität, die konstruktiven Besonderheiten des Spannbetondruckbehälters in Verbindung mit den genannten Überwachungsmaßnahmen sind wieder-kehrende Prüfungen, Druckprüfungen und zerstörungsfreie Prüfun-gen, wie sie zur Gewährleistung der Integrität metallischer Druckbehälter durchzuführen sind, nicht erforderlich.

Hochtemperaturreaktoren des eingangs beschriebenen Bautyps sind beispielsweise in den deutschen Patentanmeldungen P 31 41 734.5 und P 33 44 527.3 dargestellt.

Ein Verfahren zur Herstellung des erfindungsgemäßen Hochtemperaturreaktors ist in den Unteransprüchen angegeben.

**Ansprüche**

1. Gasgekühlter Hochtemperaturreaktor mit kugelförmigen Brennelementen, dessen Primärkreislauf von einem Spannbetondruckbehälter und Durchdringungsabschlüssen umschlossen ist und bei dem die Integrität der Komponenten des Primärkreislaufs durch hochwertige Fertigung und Auslegung, durch die Ausführung dieser Komponenten als für einen Hochtemperaturreaktor spezifische Konstruktionen sowie durch kontinuierliche und diskontinuierliche Überwachung sicherheitstechnisch wichtiger Funktionen und Betriebsdaten gewährleistet ist, gekennzeichnet durch die folgenden Merkmale:

a) eine mögliche Leckage einer jeden druckführenden Komponente kann einen vorgegebenen maximalen Wert nicht übersteigen, so daß die die Komponenten umschließenden Räume im Fall einer Leckage einer geringeren Druck-und Temperaturbelastung als bisher ausgesetzt sind;

b) die Abgaswege der aktivgasführenden Leitungen haben eine geringere Dimension als bisher üblich;

c) infolge der geringeren zeitlichen Abnahme der Dichte des Kühlgases durch die langsamere Druckentlastung haben die Nachwärme-Abfuhrsysteme eine kleinere Kapazität als bisher üblich;

d) innerhalb des gesamten Hochtemperaturreaktors wird auf Rohrbruchsicherungen verzichtet;

e) zu belüftende Räume, insbesondere zur Aufnahme von Meßgeräten, haben ein geringer ausgelegtes Kühlsystem als bisher üblich.

2. Verfahren zur Herstellung eines Hochtemperaturreaktors nach Anspruch 1, dadurch gekennzeichnet, daß für den Spannbetondruckbehälter detaillierte, dreidimensionale Spannungsanalysen des Tragwerkes sowie eine Grenztragfähigkeitsanalyse durchgeführt und bei seiner Auslegung das Betonkriechen wie auch die Spannstahl-Relaxation sowie die Lastumlagerungen bei hypothetischer Druckerhöhung berücksichtigt werden.

3. Verfahren zur Herstellung eines Hochtemperaturreaktors nach Anspruch 1, dadurch gekennzeichnet, daß einfache Durchdringungsabschlüsse verwendet werden, wobei metallische Abschlüsse mit Durchflußbegrenzung oder Betondeckel zum Einsatz kommen.

4. Verfahren nach Anspruch 3, dadurch gekennzeichnet, daß für die Auslegung metallischer Durchdringungsabschlüsse mit Einsatztemperaturen unter 400 °C der Nachweis erbracht wird, daß im Hinblick auf die Belastbarkeit dieser Bauteile für tolerierte Materialfehler Unbedenklichkeit besteht.

5. Verfahren nach Anspruch 3, dadurch gekennzeichnet, daß metallische Durchdringungsabschlüsse mit Einsatztemperaturen über 400 °C durch Einbeziehen von Zeitstandfestigkeit und Zeitdehngrenzen gegen Kriechen ausgelegt werden, wobei bei der Dimensionierung der Bauteile ausreichende Sicherheitsbeiwerte vorgegeben werden.

6. Verfahren nach Anspruch 3, dadurch gekennzeichnet, daß für die Auslegung metallischer Bauteile mit Einsatztemperaturen über 400 °C bei der Analyse des mechanischen Verhaltens dieser Bauteile Relaxationsvorgänge im Material berücksichtigt werden und daß zur Definition von Grenzwerten die Änderung der Materialeigenschaften durch Langzeitbeanspruchung mit herangezogen wird.

7. Verfahren nach Anspruch 3, dadurch gekennzeichnet, daß für die Auslegung metallischer Bauteile mit Einsatztemperaturen über 400 °C bei den Lebensdauernachweisen das Zusammenwirken von Zeitstand-und Dehnwechselbeanspruchung erfaßt wird.

8. Verfahren nach Anspruch 3, dadurch gekennzeichnet, daß bei der Auslegung metallischer Bauteile mit Einsatztemperaturen über 400 °C die Festsetzung tolerierbarer Materialfehler unter Berücksichtigung des Rißwachstums erfolgt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 043 553 (KERNFORSCHUNGSANLAGE JÜLLICH) * Seite 4, Zeilen 1-23; Seite 7, Zeilen 16-34; Seite 11, Zeile 21 - Seite 12, Zeile 17; Abbildungen 1-3 * | 1 | G 21 C 1/06 G 21 C 13/08 |
| | --- | | |
| Y | KERNENERGIE, Band 25, Nr. 1, Januar 1982, Seiten 32-38, Ost-Berlin, DD; K. FRITZ et al.: "Druckbehälter in Spannbetonbauweise für Hochtemperaturprozesse" * Seite 33, linke Spalte, Absatz 3; Seite 34, linke Spalte, Absatz 5 und rechte Spalte, Absatz 5; Seite 37, rechte Spalte, letzter Absatz; Abbildung 3 * | 1 | |
| A | Idem | 3 | RECHERCHIERTE SACHGEBIETE (Int. Cl.4) G 21 C 1/00 G 21 C 13/00 |
| | --- | | G 21 C 9/00 |
| Y,D | DE-A-3 401 499 (HOCHTEMPERATUR-REAKTORBAU) * Insgesamt * | 1 | |
| A | | 3 | |
| | ---      -/- | | |

Der vorliegende Recherchenbericht wurde für alle Patentansprüche erstellt.

| Recherchenort DEN HAAG | Abschlußdatum der Recherche 31-07-1986 | Prüfer JANDL F. |
|---|---|---|

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | REACTOR TECHNOLOGY, Band 13, Nr. 2, 1970, Seiten 109-121; CHEN PANG TAN: "Recent advances in the technology of prestressed-concrete reactor pressure vessels" * Seite 116 - Seite 117, rechte Spalte, Absätze 1,2 * | 2 | |
| A | Idem | 1 | |
| | --- | | |
| A | NUCLEAR TECHNOLOGY, Band 58, Nr. 1, Juli 1982, Seiten 90-106, Danville, Illinois, US; H. NICKEL et al.: "Qualification of metallic materials for application in advanced high temperature gas-cooled reactors" * Seite 93, linke Spalte * | 1,3-8 | RECHERCHIERTE SACHGEBIETE (Int. Cl.4) |
| | --- | | |
| A | US-A-3 779 865 (SCHAFSTALL et al.) * Spalte 1, Zeilen 40-62; Spalte 3, Zeile 38 - Spalte 4, Zeile 44; Abbildungen 1,3 * | 1,2 | |
| | --- | | |
| A,D | DE-A-3 141 734 (HOCHTEMPERATUR-REAKTORBAU) * Zusammenfassung; Seite 10, letzter Absatz; Seite 17, Absatz 2; Abbildung 1 * | 1,3 | |
| | ----- | | |

Der vorliegende Recherchenbericht wurde für alle Patentansprüche erstellt.

| Recherchenort DEN HAAG | Abschlußdatum der Recherche 31-07-1986 | Prüfer JANDL F. |
|---|---|---|